Europäisches Patentamt

European Patent Office

Office européen des brevets

(11) Veröffentlichungsnummer : **0 062 731**
**B1**

(12) # EUROPÄISCHE PATENTSCHRIFT

(45) Veröffentlichungstag der Patentschrift :
11.04.84

(21) Anmeldenummer : 82100049.4

(22) Anmeldetag : 07.01.82

(51) Int. Cl.³ : **E 04 C   2/26**, C 04 B 39/00,
B 32 B 13/14

(54) Bauplatte aus Gips und Verfahren zu deren Herstellung.

(30) Priorität : 04.04.81 DE 3113682

(43) Veröffentlichungstag der Anmeldung :
20.10.82 Patentblatt 82/42

(45) Bekanntmachung des Hinweises auf die Patenterteilung : 11.04.84 Patentblatt 84/15

(84) Benannte Vertragsstaaten :
AT BE CH DE FR GB IT LI LU NL SE

(56) Entgegenhaltungen :
DE-A- 2 728 581
DE-B- 2 049 603
DE-U- 7 806 114

(73) Patentinhaber : Firma Carl Freudenberg
Höhnerweg 2
D-6940 Weinheim/Bergstrasse (DE)

(72) Erfinder : Krull, Manfred
Hüttengasse 49
D-6901 Heiligkreuzsteinach (DE)
Erfinder : Lobert, Udo
Vogelwäldele 5E
D-7844 Neuenburg (DE)
Erfinder : Stamm, Dieter, Dr.
Bergstrasse 18 A
D-6900 Heidelberg (DE)
Erfinder : Veeser, Klaus, Dr.
Sterchele Strasse 14
D-7840 Müllheim (DE)

(74) Vertreter : Weissenfeld-Richters, Helga, Dr.
Höhnerweg 2
D-6940 Weinheim/Bergstrasse (DE)

Bauplatte aus Gips und Verfahren zu deren Herstellung

Die Erfindung betrifft eine Bauplatte aus Gips und eine teilweise darin eingepreßte Umhüllung aus einem Mineral- und/oder Glasfaservlies, die auf der Innenseite sowohl größere Poren als auch Fasern eines größeren Durchmessers aufweist als auf der Außenseite.

Eine Bauplatte der vorstehend angegebenen Art ist aus DE-U-78 06 114 bekannt. Die Vliesschicht ist dabei auf der Innenseite mit einem Glasfasergewebe oder -gelege verstärkt und sie weist dadurch anisotrope Festigkeitseigenschaften auf, die sich auf die Bauplatte übertragen.

Die Maßhaltigkeit entsprechender Bauplatten beruht herstellungsbedingt weitgehend darauf, daß die verwendete Umhüllung entlang einer vorgegebenen Linie präzise abkantbar ist. Dieses Erfordernis läßt sich unter Verwendung einer Umhüllung mit einem eingelagerten Gelege oder Gewebe relativ grober Struktur häufig nur sehr schwierig erfüllen.

Um eine verbesserte Einbettung der Glasfasern der Umhüllung in Gipsbrei zu erhalten, wird in dem genannten Gebrauchsmuster außerdem Bezug darauf genommen, die Innenseite der Umhüllung zuvor mit einem Netzmittel zu besprühen. Fasern und Gips einer solchen Bauplatte sind auch in diesem Falle ausschließlich formschlüssig verbunden, was die Erzielung einer höherwertigen Festigkeit ausschließt.

DE-A-27 28 581 nimmt Bezug auf eine Bauplatte dieser Art, bei der der Gipskern gleichmäßig verteilte Poren und kurze Stränge von Glasfasern enthält. Die Bauplatte besitzt eine verbesserte Feuerfestigkeit.

Der Erfindung liegt die Aufgabe zugrunde, eine auf üblichen Anlagen zur Herstellung von Gipskartonplatten herstellbare Bauplatte zu entwickeln, die sich durch eine verbesserte Biegefestigkeit auszeichnet.

Diese Aufgabe wird erfindungsgemäß mit den kennzeichnenden Merkmalen des Anspruchs 1 gelöst. Auf vorteilhafte Ausgestaltungen nehmen die Unteransprüche Bezug.

Die Umhüllung der erfindungsgemäß vorgeschlagenen Bauplatte kann aus einem Vliesstoff mit isotropen Festigkeitseigenschaften bestehen und sie weist dann ebenfalls eine richtungsunabhängige mechanische Widerstandsfähigkeit auf. Der Vliesstoff enthält wenigstens zwei Sorten Fasern, wobei die Fasern des größeren Durchmessers auf der Innenseite angeordnet sind und alle Fasern durch ein an sich bekanntes Bindemittel untereinander verklebt sind, das 30 bis 85 % Aluminium-, Eisen- und/oder Siliciumhydroxid, bezogen auf das Gewicht des Bindemittels, enthält.

Es ist auch möglich, zur Erzielung einer besonders großen Festigkeit in einer bevorzugten Richtung, beispielsweise in der Längsrichtung, in dieser Richtung entsprechend orientierte Fäden in den Vliesstoff einzulagern. Diese Fäden können bereits bei der Herstellung eingebracht sein, beispielsweise durch Einlaufen lassen zwischen die einzelnen, den Vliesstoff bildenden Florschichten. Es ist auch möglich, die Fäden in Form einer Fadenschar auf die Innenseite des Vliesstoffes aufzubringen und mit dieser zu verkleben, beispielsweise während der anschließenden Imprägnierung. Der gegenseitige Abstand der Fäden soll 5 bis 20 mm betragen bei einem Durchmesser von 30 bis 150 dtex. Die konstruktionstechnische Verwendbarkeit wird hierdurch soweit verbessert, daß tragende Funktionen im Hochbau erfüllt werden können.

Bei dem Bindemittel kann es sich um eine anorganische oder um eine organische Substanz handeln, und es hat den Zweck, die Fasern des Vlieses untereinander zu einer Einheit zu verbinden. Das Vlies ist dadurch formstabil, und es kann örtlich getrennt von der Herstellung der eigentlichen Bauplatte produziert und beispielsweise auch auf einer Rolle aufgewickelt in die letztgenannte Fertigungsstätte transportiert werden.

Das Bindemittel weist einen Gehalt eines Aluminium-, Eisen- und/oder Siliciumhydroxids auf. Hierdurch ergibt sich beim Abbinden des in flüssiger Form aufgebrachten Gipsbreis eine chemische Brückenbildung, durch die die Festigkeit der Verbindung zwischen der Umhüllung und dem Gipskern der Bauplatte eine wesentliche Steigerung erfährt. Insbesondere Biegebeanspruchungen werden wesentlich besser aufgefangen.

Das Vlies kann aus Fasern stark variierenden Durchmessers aufgebaut sein, beispielsweise aus Fasern eines statistisch variierten Durchmessers, was zu großen Festigkeiten führt. Der größere Durchmesser soll 10-50 μ nicht überschreiten, und zugleich dem 1,5 bis 5-fachen Wert des geringsten Faserdurchmessers entsprechen. Es wurde gefunden, daß es von großem Vorteil ist, wenn die relativ dickeren Fasern zugleich auch eine relativ größere Länge haben als die übrigen Fasern. Um eine große Gleichmäßigkeit der Faserverteilung zu erhalten, soll jedoch dabei ein Wert von 5-12 mm nicht überschritten werden, der zugleich dem 1,5 bis 5-fachen Wert der zugehörigen Länge der relativ feinsten Fasern entspricht. Die Fasern sind untereinander vermischt, und werden so zur Ablage gebracht, daß innerhalb des Vlieses der Anteil groberer Fasern von der Innenseite zur Außenseite abnimmt. Die Innenseite zeichnet sich dadurch durch eine relativ grobe Porenstruktur aus, die dem in flüssiger Form aufgebrachten Gipsbrei ein leichtes Eindringen ermöglicht und dadurch eine gute Einbindung der Umhüllung. Ein unerwünschtes Durchschlagen und eine daraus resultierende Verschmutzung der benötigten Anlagen wird durch die feine Porenstruktur der Außenseite verhindert. Der Offenflächenanteil ist so bemessen, daß sich ein Dampfdruck im Inneren der Bauplatte während der Trocknung oder während der späteren Benutzung nicht bilden kann.

Der Gehalt des Bindemittels, bezogen auf das Gewicht der Fasern, soll 50 bis 200 % betragen. Das Bindemittel soll die Fasern möglichst auf der gesamten Oberfläche umhüllen, und der absolute Gehalt nimmt in diesem Falle entsprechend der sich relativ vergrößernden Oberfläche mit zunehmender Faserfeinheit in Richtung der Außenseite zu. In Abhängigkeit von der Benetzungsfähigkeit der Fasern kann durch das in flüssiger Form aufgebrachte Bindemittel sich darüber hinaus eine Bindemittel-Anreicherung und sogenannte Segelbildung aus Bindemittel an den Faserkreuzungspunkten ergeben, was wesentlich zur Verfestigung und Einbindung in den Gipsbrei beiträgt. Die Segelbildung kann bei einer besonders dichten Faserlagerung auch zu einer Brückenbildung zwischen sich nicht unmittelbar überkreuzenden und gegenseitig berührenden Fasern führen und damit zum Verstopfen der durch die Fasern ursprünglich umschlossenen Poren. Eine entsprechend dichte Faserlagerung ist auf der Außenseite ohne Schwierigkeiten erzielbar und verhindert das Verschmutzen der Maschine durch den auf die Innenseite des Vlieses aufgegossenen Gipsbrei. Ein weiterer Vorteil ergibt sich in diesem Falle aus der Möglichkeit, die Oberflächen-Eigenschaften der Bauplatte in bezug auf besondere Beanspruchungen zu modifizieren und ihr beispielsweise eine besonders gute Abriebfestigkeit, Wasserbeständigkeit und Feuerwiderstandsdauer zu verleihen. Darüber hinaus ergibt sich ein idealer Haftgrund für nachträgliche Beschichtungen und Versiegelungen, die die Verwendung einer entsprechend ausgestatteten Bauplatte im Außenbereich und im Bereich der Einwirkung aggressiver Medien ermöglichen.

Aluminium-, Eisen- und Siliciumhydroxid haben darüber hinaus gute Flammschutzeigenschaften, was in bezug auf die Einhaltung der bestehenden Brandschutz-Vorschriften von großer Bedeutung ist. Diese lassen sich insofern auch dann erfüllen, wenn als eigentliches Bindemittel eine organische oder gegebenenfalls eine elastische Substanz verwendet wird, beispielsweise ein Bindemittel auf Basis einer Acrylsäuredispersion.

In DE-U-78 06 114 wird ein Verfahren zur Herstellung einer Bauplatte beschrieben, bei dem der Gipsbrei auf das in Längsrichtung mit seitlichen Aufkantungen versehene Vlies aufgeformt, mit einem weiteren Vlies abgedeckt, kuvertiert und getrocknet wird. Wie vorstehend bereits erläutert, wird dabei ausschließlich eine mechanische Verankerung der innenliegenden Fasern des Vlieses in dem Gipsbrei erzielt. Die Festigkeit der erhaltenen Verbindung ist insofern unzureichend. Um Abhilfe zu schaffen wird erfindungsgemäß ein Verfahren vorgeschlagen, das die kennzeichnenden Merkmale des Anspruchs 8 aufweist.

Das erfindungsgemäß verwendete Vlies muß somit in einem vorausgegangenen Verfahren mit einem an den Fasern anhaftenden Bindemittel versetzt worden sein, das einen Gehalt von 30 bis 85 % eines Aluminium-, Eisen- und/oder Siliciumhydroxid enthält. Auf dieses Vlies wird in an sich bekannter Weise der mit Wasser zu einer pastösen Masse angesetzte Gipsbrei aufgebracht und unter Anwendung der bekannten Technologien ausgebreitet und in die nach innen geöffneten Poren des Vlieses eingepresst. Das Kuvertieren mit einem Abdeckvlies folgt in bekannten Vorgehensweisen.

Durch die spontane Erwärmung der Oberfläche auf eine Temperatur von 100 bis 180 °C, vorzugsweise auf eine Temperatur von 100-120 °C wird offenbar in diesem Bereich zumindest ein Teil des für das Abbinden des Gipses benötigten Wassers nicht aus dem eigentlichen Gipsbrei entnommen, sondern aus dem Eisen- und/oder Aluminium- und/oder Siliciumhydrat, und angelagert. Die erhaltene Verbindung ist von großer mechanischer Festigkeit und sie wird durch das Bindemittel in Richtung der Fasern ergänzt. Die Bruchlinie bei einer gewaltsamen Trennung befindet sich stets in einem Abstand von der Oberfläche der Fasern.

Beispiel 1

Ein Naßvlies aus zwei gleich schweren Schichten mit einem Fasergehalt von 0,981 N (100 g)/m² wird durch Imprägnierung mit einem Bindemittel verfestigt. Die obere der beiden Schichten bestand zu 80 Teilen aus Glasfasern mit einem Durchmesser von 9 μ bei einer Länge von 13 mm und zu 20 Teilen aus Glasfasern mit einem Durchmesser 16 μ bei einer Länge von 26 mm. Die untere der beiden Schichten enthielt neben 80 Teilen Glasfasern mit einem Durchmesser von 16 μ bei einer Länge von 26 mm 20 Teile Glasfasern mit einem Durchmesser von 9 μ bei einer Länge von 13 mm. Die Fasern waren in beiden Schichten wirr verteilt, d. h. ohne eine bevorzugte Richtungsorientierung zusammen gelagert.

Zur Verfestigung war ein Bindemittel enthalten, das neben 16 Teilen Acrylsäure-Ester 84 Teile Aluminiumhydroxid enthielt. Das mit dem Bindemittel versehene Naßvlies hatte ein Flächengewicht von 2,747 N (280 g)/m². Es zeigte auf der Unterseite eine wesentlich gröbere Porenstruktur als auf der Oberseite. Der in relativ dünnflüssiger Form aufgebrachte Gipsbrei vermochte dadurch ausgezeichnet in das Innere des Naßvlieses einzudringen, ohne jedoch in Richtung der Oberseite durchzuschlagen. Das vorgeschlagene Naßvlies läßt sich dadurch ausgezeichnet auf den üblichen Bandanlagen zur Herstellung von Gipskartonplatten einsetzen. Entsprechende Verfahren werden beispielsweise von Hanusch in « Gipskartonplatten », Verlagsgesellschaft Rudolf Müller, Köln-Braunsfeld, 1978 beschrieben. Dementsprechend wird das Naßvlies mit nach oben weisender, grobstrukturierter Unterseite auf die Anlage aufgebracht und mit dem pastösen Gipsbrei beschichtet. Ein zweites, entsprechendes Naßvlies wird unmittelbar anschließend in diesen mit der grobstrukturierten Unterseite eingepresst, so daß der Gipsbrei auch auf dieser Seite in die nach unten offenen Poren einzudringen und die Fasern zu umhüllen vermag.

Nach dem Abbinden des Gipsbreis wird aus der erhaltenen Bauplatte eine Probe entnommen. Diese weist bei einer Dicke von 15 mm eine Bruchlast nach DIN 18 180 von 614 N auf. Das entspricht einem Bruchmoment von 22,1 Nm/400 mm Probenbreite.

In einem Vergleichsversuch wurde anschließend ein entsprechender Prüfling getestet, dessen Naßvliesstoff anstelle des Gehaltes an Aluminiumhydroxid einen gleich großen Gehalt an Kreide aufwies. Die Bruchlast nach DIN 18 180 betrug 330 N. Das entspricht einem Bruchmoment von 49,5 Nm/400 mm Probenbreite. Der Vergleich der Bruchlasten von 614 N zu 330 N zeigt eine Verbesserung der Biegesteifigkeit von 86 %.

Beispiel 2

Unter Verwendung der Faserzusammensetzungen aus dem Beispiel 1 wurde ein Glasfaservlies mit einem Flächengewicht von 0,883 N (90 g)/m² gebildet. Dieses wurde durch Imprägnierung mit einem Bindemittel verfestigt, das bei einem Gehalt von 80 % Formaldehyd-Harnstoff 20 % Eisenhydroxid enthielt. Das Fertiggewicht betrug 2,472 N (252 g)/m². Die zugehörige Bruchlast eines Prüflings mit einer Dicke von 15 mm betrug nach DIN 18 180 554 N. Das entspricht einem Bruchmoment von 83,1 Nm/400 mm.

In einem Vergleichsversuch wurde anschließend das gleiche Glasfaservlies mit einer entsprechenden Imprägnierung-Mischung gebunden, wobei jedoch der Gehalt des Eisenhydroxids durch einen gleich großen Gehalt von Kreide ersetzt wurde. Die Bruchlast wurde zu 280 Nm ermittelt, was einem Bruchmoment von 42 Nm bei einer Probenbreite von 400 mm entsprach.

Durch die Einmischung von Eisenhydroxid ergibt sich demgegenüber bei einem gleich großen Anteil von Kreide eine Verbesserung der Festigkeitseigenschaften von 98 %.

Beispiel 3

Unter Verwendung der Faserzusammensetzungen aus dem Beispiel 1 wird auf trockenem Wege ein Glasfaservlies mit einem Flächengewicht von 0,785 N (80 g)/m² gebildet. Dieses wird mit einer Lösung eines elastomeren Polyurethans mit einem Gehalt aus Siliciumhydroxid imprägniert und verfestigt. Das Fertiggewicht betrug 2,197 N (224 g)/m², wovon 18 % auf das Polyurethan entfielen, 82 % auf das Siliciumhydroxid, bezogen auf den Bindemittelgehalt.

Der Vliesstoff wurde entsprechend den Ausführungen im Beispiel 1 in eine Bauplatte eingearbeitet. Eine daraus entnommene Probe mit einer Dicke von 15 mm zeigte im Zugversuch nach DIN 18 180 eine Bruchlast von 512 N, das entspricht einem Bruchmoment von 76,8 Nm bei einer Probenbreite von 400 mm.

Zum Vergleich wurde anschließend eine entsprechende Probe angefertigt, bei der das Siliciumhydroxid durch einen gleich großen Anteil aus Kreide ersetzt worden ist. Die Bruchlast betrug in diesem Falle 385 N, was einem Bruchmoment von 57,8 Nm bei einer Probenbreite von 400 mm entspricht. Durch die Einlagerung von Siliciumhydroxid ergab sich somit in diesem Falle eine Verbesserung der mechanischen Eigenschaften von 33 %.

Beispiel 4

Unter Verwendung der Faserzusammensetzungen aus dem Beispiel 1 wurde auf naßem Wege ein Glasfaservlies mit einem Flächengewicht von 1,177 N (120 g)/m² gebildet. Dieses wurde durch Einsprüchen eines Bindemittels auf Formaldehyd-Basis eigenstabilisiert und anschließend mit einem Bindemittel verfestigt, das zu 25 % aus Acrylsäure-Ester und 75 % aus Aluminiumhydroxid zusammengesetzt war. Das Fertiggewicht betrug 3,296 N (336 g)/m².

Nach der Verarbeitung zu einer Bauplatte entsprechend Beispiel 1 mit einer Dicke von 15 mm, wurde ein Prüfling entnommen und unter den in DIN 18 180 vorgeschriebenen Bedingungen getestet. Dabei wurde eine Bruchlast von 693 Nm ermittelt, was einem Bruchmoment von 104 N/400 mm entspricht.

Anschließend wurde in einem Vergleichsversuch eine entsprechende Bauplatte hergestellt, deren Abdeckvlies anstelle des Aluminiumhydroxids einen gleich großen Gehalt an Kreide aufwies. Als Bruchlast wurde ein Wert von 367 N ermittelt, was einem Bruchmoment von 55 Nm/400 mm entsprach. Durch die Einbettung von Aluminiumhydroxid in das Bindemittel ergibt sich demgegenüber eine Verbesserung der mechanischen Eigenschaften um 89 %.

Ansprüche

1. Bauplatte aus Gips und einer teilweise darin eingepreßten Umhüllung aus einem Mineral- und/oder Glasfaservlies, die auf der Innenseite sowohl größere Poren als auch Fasern eines größeren Durchmessers aufweist als auf der Außenseite, dadurch gekennzeichnet, daß die Fasern durch ein an sich bekanntes Bindemittel verklebt sind und daß das Bindemittel 30–85 Gew.-% Aluminium-, Eisen- und/oder Siliciumhydroxid enthält.

2. Bauplatte nach Anspruch 1, dadurch gekennzeichnet, daß der größte Faserdurchmesser 10 bis 50 μ beträgt und zugleich dem 1,5 bis 5-fachen Wert des geringsten Faserdurchmessers entspricht.

3. Bauplatte nach Anspruch 1 bis 2, dadurch gekennzeichnet, daß die Länge der Fasern mit zunehmenden Durchmesser ansteigt, und daß die größte Länge 5 bis 12 mm beträgt, was zugleich dem 1,5 bis 5-fachen Wert der Länge der kürzesten Fasern entspricht.

4. Bauplatte nach Anspruch 1 bis 3, dadurch gekennzeichnet, daß die Fasern untereinander vermischt sind, und daß der Anteil grober Fasern von der Innenseite kontinuierlich in Richtung der Außenseite abnimmt.

5. Bauplatte nach Anspruch 1 bis 4, dadurch gekennzeichnet, daß der Gehalt des Bindemittels, bezogen auf das Gewicht der Fasern, 50 bis 200 % beträgt.

6. Bauplatte nach Anspruch 5, dadurch gekennzeichnet, daß der absolute Gehalt des Bindemittels in Richtung der Außenseite zunimmt.

7. Bauplatte nach Anspruch 1 bis 6, dadurch gekennzeichnet, daß das Bindemittel aus einer organischen Substanz mit elastischen Eigenschaften besteht, vorzugsweise aus einem Polyacrylat.

8. Verfahren zur Herstellung einer Bauplatte nach Anspruch 1 bis 7, bei dem der Gipsbrei auf dem in Längsrichtung mit seitlichen Aufkantungen versehenen Vlies ausgeformt, mit einem weiteren Vlies abgedeckt, kuvertiert und getrocknet wird, dadurch gekennzeichnet, daß in das Vlies ein an den Fasern haftendes Bindemittel mit einem Gehalt von 30 bis 85 % Aluminium-, Eisen- und/oder Siliciumshydroxid eingelagert wird, und daß die nach dem Ausformen des Gipsbreis und dem Kuvertieren mit dem Abdeckvlies erhaltene Bauplatte an den Oberflächen zumindest kurzzeitig auf eine Temperatur von 100 bis 180 °C erwärmt wird, vorzugsweise auf eine Temperatur von 100 bis 120 °C.

## Claims

1. A building board which is made of gypsum plaster and has a mineral and/or glass fibre fleece sheath partially pressed into it, and which has on the inside not only larger pores but also fibres of a greater diameter than on the outside, which board is characterised in that the fibres are bonded to one another by means of a binder known per se and in that the binder contains 30-85 % by weight of aluminium hydroxide, iron hydroxide and/or silicon hydroxide.

2. A building board according to claim 1, characterised in that the largest fibre diameter is 10 to 50 μ and is also 1.5 to 5 times the value of the smallest fibre diameter.

3. A building board according to claim 1 or 2, characterised in that the length of the fibres increases with increasing diameter and in that the greatest length is 5 to 12 mm, which is also 1.5 to 5 times the length of the shortest fibres.

4. A building board according to any of claims 1 to 3, characterised in that the fibres are intermixed with one another and in that the proportion of coarse fibres continuously decreases from the inside towards the outside.

5. A building board according to any of claims 1 to 4, characterised in that the binder content, relative to the weight of the fibres, is 50 to 200 %.

6. A building board according to claim 5, characterised in that the absolute binder content increases towards the outside.

7. A building board according to any of claims 1 to 6, characterised in that the binder comprises an organic substance having elastic properties, preferably a polyacrylate.

8. A process for manufacturing a building board according to any of claims 1 to 7 by shaping out gypsum plaster paste on a fleece which is turned up at the long edges, covering and enveloping it with a further fleece and drying, characterised in that a binder containing 30 to 85 % of aluminium hydroxide, iron hydroxide and/or silicon hydroxide is embedded in the fleece and adheres to the fibres, and in that the building board obtained when the gypsum plaster paste has been shaped out and enveloped with the covering fleece is heated, at least briefly, at the surfaces to a temperature of 100-180 °C, preferably to a temperature of 100 to 120 °C.

## Revendications

1. Panneau de plâtre avec une enveloppe, constituée par un voile de fibres minérales et/ou de verre et partiellement pressée dans le plâtre et dont la face intérieure présente des pores plus grands et des fibres de diamètre plus élevé que ceux de la face extérieure, ledit panneau étant caractérisé en ce que les fibres sont collées par un liant connu ; et le liant contient en poids 30-85 % d'hydroxyde d'aluminium, de fer et/ou de silicium.

2. Panneau selon revendication 1, caractérisé en ce que le diamètre maximal des fibres est de 10 à 50 μ et égal simultanément à 1,5-5 fois le diamètre minimal des fibres.

3. Panneau selon revendications 1 et 2, caractérisé en ce que la longueur des fibres croît avec le diamètre ; et la longueur maximale est de 5 à 12 mm et égale simultanément à 1,5-5 fois la longueur des fibres les plus courtes.

4. Panneau selon revendications 1 à 3, caractérisé en ce que les fibres sont mélangées entre elles ; et la teneur en fibres grosses diminue continûment de la face intérieure vers la face extérieure.

5. Panneau selon revendications 1 à 4, caractérisé en ce que la teneur en liant, rapportée au poids de fibres, est de 50 à 200 %.

6. Panneau selon revendication 5, caractérisé en ce que la teneur absolue en liant croît vers la face extérieure.

7. Panneau selon revendications 1 à 6, caractérisé en ce que le liant est constitué par une substance organique à propriétés élastiques, et de préférence par un polyacrylate.

8. Procédé de fabrication d'un panneau selon revendications 1 à 7, dans lequel le plâtre gâché est déposé sur le voile dont les grands côtés sont repliés latéralement, couvert d'un second voile, recouvert puis séché, ledit procédé étant caractérisé en ce qu'un liant adhérant aux fibres et contenant 30 à 85 % d'hydroxyde d'aluminium, de fer et/ou de silicium est incorporé au voile ; et les surfaces du panneau, obtenu après le moulage du plâtre gâché et le recouvrement par le voile de couverture, sont chauffées brièvement au moins à une température de 100 à 180 °C, et de préférence de 100 à 120 °C.